# FASCICULE DE BREVET EUROPEEN

(11) **EP 2 697 142 B1**
(45) Date de publication et mention de la délivrance du brevet: **06.07.2016**
(21) Numéro de dépôt: 12718703.7
(22) Date de dépôt: 06.04.2012
(51) Int. Cl.: B65G 47/14

(54) **DISPOSITIF D'ALIGNEMENT D'OBJETS EN VRAC DU TYPE PREFORME A COLLERETTE.**
VORRICHTUNG ZUM AUSRICHTEN VON LOSEN GEGENSTÄNDEN, WIE VORFORMEN MIT FLANSCHEN
DEVICE FOR ALIGNING OBJECTS IN BULK, SUCH AS PREFORMS HAVING FLANGES

(30) Priorité: 12.04.2011 FR 1153186
(43) Date de publication de la demande: 19.02.2014
(73) Titulaire: Sidel Participations, 76930 Octeville sur Mer (FR)
(72) Inventeur: SOUFFES, Denis, F-76930 Octeville Sur Mer (FR); BIANCHINI, Cédric, F-76930 Octeville Sur Mer (FR)
(74) Mandataire: Siloret, Patrick
(86) Numéro de dépôt international: PCT/FR2012/050759
(87) Numéro de publication internationale: WO 2012/143650

(56) Documents cités:
- EP-A1- 1 866 223
- EP-A1- 2 048 097
- US-A- 4 453 626

## Description

### DOMAINE DE L'INVENTION :

L'invention concerne le domaine des dispositifs d'alignement d'objets en vrac, lesdits objets présentant une collerette.

L'invention concerne en particulier les dispositifs d'alignement de préformes destinées à la fabrication de bouteilles par étirage/soufflage.

### ETAT DE LA TECHNIQUE :

De telles préformes sont sensiblement symétriques de révolution et comprennent un corps qui sera soufflé alors qu'un goulot ainsi qu'une collerette axialement située entre le goulot et le corps gardent leur dimensions d'origine après l'opération de soufflage.

Le document EP 1 866 223 décrit un dispositif pour redresser de telles préformes selon le préambule de la revendication 1. Un plateau rotatif reçoit les préformes. Un guide périphérique forme un interstice entre la face supérieure du plateau rotatif et le guide. Le corps des préformes passe radialement vers l'extérieur à travers l'interstice. Les préformes se déplacent dans le sens de rotation du disque le long du guide jusqu'à un segment d'évacuation. Puis, les préformes ainsi alignées glissent par gravité le long d'un rail. En raison de la faible densité des préformes, l'écoulement par gravité limite beaucoup le débit des préformes redressées pouvant être délivrées par un tel dispositif.

Les installations de soufflage de bouteilles présentent des cadences de plus en plus élevées. Cela impose que le dispositif fournissant les préformes soit capable d'aligner des préformes initialement en vrac, mais également puisse délivrer ces préformes alignées de manière à ce qu'elles soient prises en charge par des moyens de préhension ou de captage positif qui saisissent complètement chaque préforme de manière à en maîtriser la position exacte et pouvoir imposer à cette préforme un déplacement rapide malgré la légèreté de la préforme. La transition des préformes délivrées par le dispositif précédemment décrit vers un moyen de préhension ou de captage positif pose un problème de synchronisation des moyens de captage par rapport aux préformes arrivant dans le segment d'évacuation précité. Cela peut engendrer un carambolage des préformes qui sont uniquement retenues par leur collerette.

### OBJET ET RESUME DE L'INVENTION :

L'invention propose un dispositif d'alignement et un procédé d'alignement d'objets en vrac du type préforme à collerette qui remédient à au moins l'un des inconvénients précités.

Un but de l'invention est de permettre au dispositif d'alignement de fournir un flux de préformes qui peut être synchronisé avec un moyen de captage positif.

Selon un mode de réalisation, le dispositif d'alignement d'objets en vrac du type préformes à collerette, comprend les caractéristiques techniques de la revendication 1.

Dans le cas de préformes couramment utilisées pour l'étirage/soufflage de récipients, la partie passant entre le guide et le disque correspond au corps de la préforme qui est plus lourd que le goulot. La collerette s'étend radialement par rapport à l'axe de la préforme et la préforme est correctement guidée lorsque la collerette est en contact avec le guide et est sensiblement parallèle au guide. Des préformes du couloir de stabilisation peuvent alors être ralenties pour être synchronisées avec un moyen de captage positif. Les préformes arrivant successivement l'une derrière l'autre sous l'effet d'entraînement du disque s'accumulent le long du guide en ayant leur collerettes en contact les unes avec les autres. La collerette des préformes les plus en aval, c'est-à-dire les plus proches des préformes en train d'être ralenties, sont soumises à la pression de toutes les préformes accumulées derrières elles. Le fait d'avoir un couloir de stabilisation maintient en position sensiblement parallèle les collerettes les plus comprimées. Cela évite que la file de préformes guidées n'explose et provoque un foisonnement de préformes vers la zone centrale.

Avantageusement, le guide périphérique est interrompu sur un secteur angulaire, ledit secteur s'étend dans le sens de rotation du disque à partir d'une extrémité d'évacuation du guide.

Avantageusement, l'extrémité amont de la plaque de stabilisation comprend un élément d'aiguillage apte à trier les préformes correctement guidées des préformes non correctement guidées. L'élément de tri sélectionne alors les préformes dont les collerettes glissent sous l'effet d'entraînement du disque dans le couloir de stabilisation.

Avantageusement, le couloir de stabilisation s'étend sensiblement jusqu'à l'extrémité d'évacuation.

Avantageusement, la plaque de stabilisation est raccordée au bâti par un ressort de stabilisation et est mobile entre ladite position de stabilisation et une position de réintroduction dans laquelle une des préformes dont la collerette est guidée dans le couloir de stabilisation est autorisée à rejoindre la zone centrale.

Avantageusement, le ressort de stabilisation est tel que la plaque de stabilisation en position de stabilisation plaque les collerettes de ladite pluralité de préformes contre le guide tout en autorisant le glissement desdites collerettes le long du guide.

Avantageusement, le ressort de stabilisation peut comprendre une plaque flexible fixée sur le bâti selon une ligne de fixation sensiblement parallèle au disque. La plaque de stabilisation et le ressort de stabilisation peuvent être deux parties d'une même plaque ou bien être deux éléments assemblés. L'orientation de la ligne de fixation permet au rebord inférieur de la plaque de stabilisation de se soulever en étant reculé vers la zone centrale.

Avantageusement, la plaque de stabilisation peut être rigide et le ressort de stabilisation peut être fixé à la plaque de stabilisation selon une ligne de fixation sensiblement parallèle au disque. Cela permet d'avoir à la fois une bonne rigidité et une bonne résistance à l'usure de la portion en contact avec les préformes ainsi qu'un effort de plaquage bien maîtrisé pouvant être aussi faible que souhaité pour éviter le blocage de l'écoulement des préformes dans le couloir de stabilisation.

Selon un mode de réalisation, le dispositif comprend un déflecteur rigide qui est fixé au bâti, s'étend en aval de l'extrémité d'évacuation, est incurvé de manière à empêcher les préformes dont les collerettes ne sont pas aiguillées dans le couloir de stabilisation de s'échapper par le secteur angulaire sous l'effet de la force centrifuge. La pression du flux de préformes sur le déflecteur incurvé est plus élevée que sur le guide en raison de la déviation du flux. La rigidité du déflecteur et sa fixation rigide sur le bâti permet au rebord inférieur du déflecteur de ne pas se soulever, même légèrement sous l'effet de cette pression du flux de préformes. La rigidité et la fixation du déflecteur sur le bâti évitent aux préformes de s'encastrer entre le déflecteur et le disque.

Selon un mode de réalisation, le dispositif comprend en outre un élément de raccordement qui est flexible et présente une première extrémité solidaire de la plaque de stabilisation mobile et une deuxième extrémité solidaire du déflecteur fixe. L'élément de raccordement est agencé pour guider continument vers le déflecteur des préformes dont au moins les collerettes sont situées d'un côté radialement intérieur de la plaque de stabilisation. L'élément flexible permet d'éviter à ces préformes de s'encastrer sur une pointe du déflecteur.

Avantageusement, la deuxième extrémité de l'élément de raccordement peut être rigidement fixée au déflecteur selon une ligne de fixation sensiblement perpendiculaire au disque et coulisse librement par rapport à la plaque de stabilisation. Cela permet au rebord inférieur de l'élément flexible de rester sensiblement parallèle au disque malgré le soulèvement de la plaque de stabilisation en position de réintroduction d'une préforme.

Avantageusement, la plaque de stabilisation peut présenter une forme de réception de l'élément de raccordement ayant une section parallèle au disque en forme de Y. L'élément de raccordement coulisse librement entre les deux branches du Y. Ainsi, la liaison solidarisant la première extrémité de l'élément de raccordement avec la plaque de stabilisation n'engendre aucun obstacle susceptible de gêner les deux écoulements que sont, d'une part, l'écoulement des préformes dites « non correctement guidées », c'est-à-dire n'ayant pas été sélectionnées par l'élément d'aiguillage et s'écoulant dans le sens de rotation du disque le long d'un côté radialement intérieur de la plaque de stabilisation puis le long de l'élément flexible puis le long du déflecteur et d'autre part l'écoulement des préformes correctement guidées en cours d'évacuation.

Avantageusement, l'élément de raccordement est fixé sur une face radialement intérieure du déflecteur. Ainsi, la liaison solidarisant la deuxième extrémité de l'élément flexible avec le déflecteur fixe n'engendre pas d'obstacle à l'écoulement des préformes dites « non correctement guidées ».

Avantageusement, l'élément de raccordement présente une portion d'extrémité qui est cachée entre les deux branches du Y lorsque la plaque de stabilisation est en position de stabilisation. La portion d'extrémité présente un rebord inférieur qui est incliné par rapport au disque de manière à faciliter l'écoulement des préformes lorsque la plaque de stabilisation est en position de réintroduction. Cela réduit les carambolages engendrés par la réintroduction suite à un incident lors de la synchronisation avec un moyen de captage positif d'une des préformes pourtant correctement guidées dont la collerette glisse dans le couloir de stabilisation.

Avantageusement, l'élément de raccordement, la plaque de stabilisation et le déflecteur présentent chacun un rebord inférieur. Les rebords inférieurs sont dans l'alignement l'un de l'autre lorsque la plaque de stabilisation est en position de stabilisation et s'étendent à une distance du disque sensiblement égale à ladite distance prédéterminée. Cela évite de perturber l'écoulement de préformes dont une partie passe entre le guide et le disque, ou bien entre la plaque de stabilisation et le disque, bien qu'ayant une collerette retenue sur un côté radialement intérieur de la plaque de stabilisation, de l'élément flexible ou du déflecteur.

Selon un mode de réalisation, le dispositif comprend un moyen de captage positif disposé de manière à saisir des préformes issues de l'extrémité d'évacuation.

Selon un autre aspect, l'invention porte sur un procédé d'alignement d'objets en vrac du type préforme à collerette, comprenant les étapes de :
- projection des préformes en vrac vers un guide périphérique par l'entrainement des préformes en vrac par friction naturelle sur un disque rotatif,
- rétention radiale des préformes dans laquelle on retient les préformes par leur collerette tout en autorisant leur glissement et leur accumulation le long du guide périphérique,
- tri en un point d'aiguillage des préformes correctement guidées par rapport aux préformes non correctement guidées, et
- évacuation des préformes correctement guidées,
- maintien correct du guidage d'une pluralité de préformes entre leur tri et leur évacuation, dans lequel le maintien correct du guidage peut être suspendu temporairement pour autoriser la réintroduction d'une préforme pourtant correctement guidée mais non encore évacuée pour pallier à un incident.

Avantageusement, le procédé peut comprendre en outre une étape de captage positif des préformes évacuées.

Avantageusement, le procédé peut comprendre une étape de déviation dans laquelle on dévie les préformes non correctement guidées vers une portion du guide en amont du point d'aiguillage pour empêcher lesdites préformes de bousculer les préformes en cours d'évacuation.

Avantageusement, la déviation des préformes non correctement guidées se fait en limitant leur désorientation par rapport au guide.

### BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :
   - la figure 1 est un schéma vu de dessus d'une partie du dispositif d'alignement montrant la transition avec un moyen de captage positif.
   - La figure 2 est un schéma vu de face de la partie de la figure 1.
   - La figure 3 est un schéma en coupe horizontale selon le plan III-III de la figure 2 montrant la zone d'évacuation dés préformes.
   - La figure 4 est un schéma en coupe radiale selon le plan IV-IV de la figure 1, montrant la plaque de stabilisation en position de stabilisation.
   - La figure 5 est un schéma en coupe radiale selon le plan IV-IV de la figure 1 montrant la plaque de stabilisation en position de réintroduction.
   - La figure 6 est un schéma en vue de face de la partie de la figure 1 lorsque la plaque de stabilisation est en position de réintroduction.

### DESCRIPTION DETAILLEE :

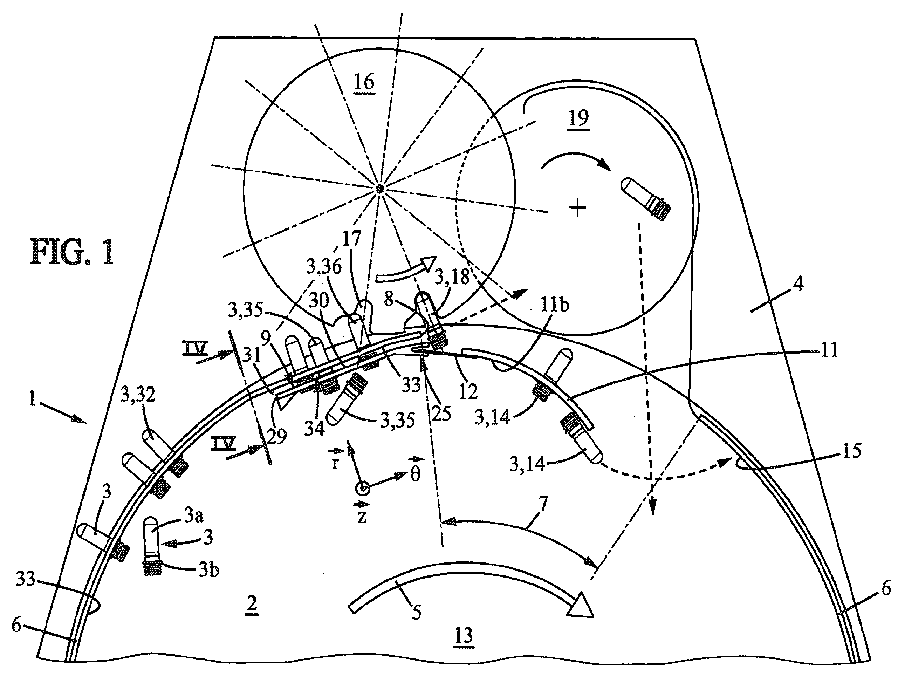

Comme illustré en figure 1, le dispositif **1** d'alignement comprend un disque **2** d'entrainement des préformes **3** monté à rotation sur un bâti **4** autour d'un axe de rotation non représenté selon un sens de rotation illustré par la flèche **5.** Le dispositif 1 d'alignement comprend également un guide **6** périphérique s'étendant à la périphérie du disque 2. Le guide 6 peut avantageusement être circulaire et coaxial au disque 2. Le guide 6 est interrompu sur un secteur **7** angulaire. Le guide 6 présente une extrémité **8** d'évacuation située en amont du secteur 7 angulaire dans le sens de rotation du disque 2.

L'axe de rotation du disque 2 est un axe Z qui est vertical lorsque le dispositif est en fonctionnement. Un axe R est radial, c'est-à-dire perpendiculaire à Z et au guide 6 circulaire. Un axe θ est perpendiculaire à Z et à R, c'est-à-dire horizontal et tangent au guide 6.

Les préformes 3 peuvent être symétriques de révolution pour faciliter leur roulement sur le disque 2. Elles comprennent un corps **3a** destiné à être soufflé et un col ainsi qu'une collerette **3b** située entre le col et le corps. La collerette 3b est circulaire, perpendiculaire à l'axe de la préforme 3 et d'épaisseur sensiblement constante.

Le disque 2 présente une zone 13 centrale où sont déversées des préformes 3 en vrac. Sous l'effet de leur propre poids, les préformes 3 frottent sur le disque 2 et sont entrainées en rotation dans le sens de la flèche 5 et sont projetées radialement vers le guide 6 sous l'effet de la force centrifuge.

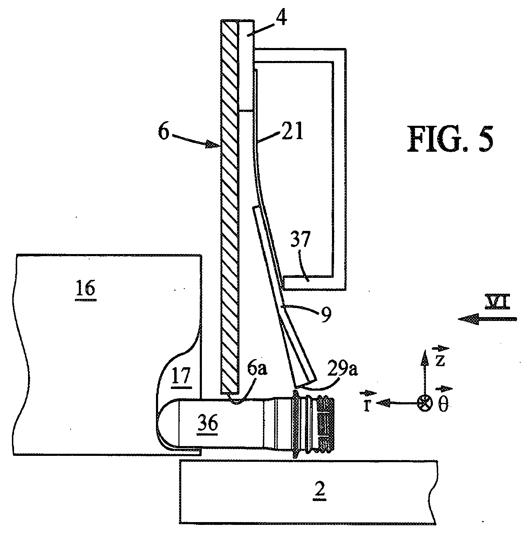

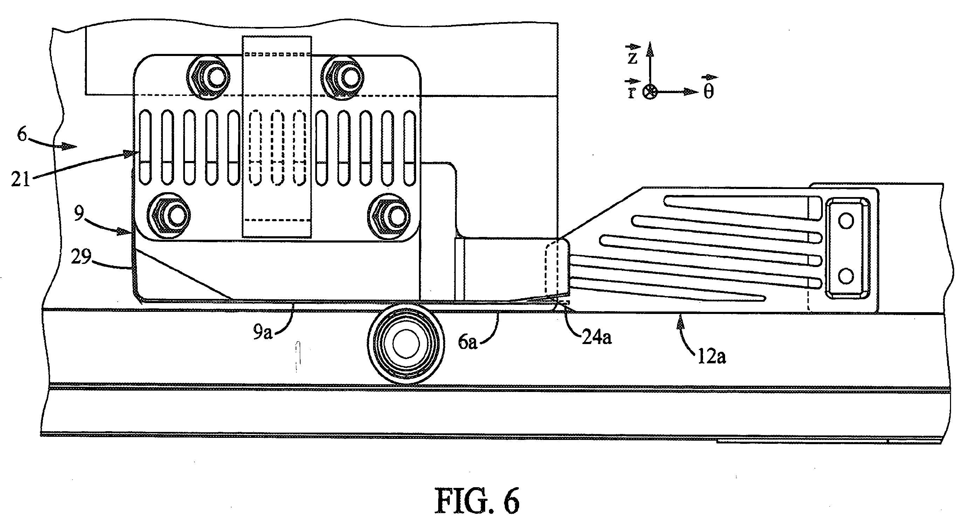

Le dispositif 1 d'alignement comprend en outre une plaque 9 de stabilisation disposée en regard d'une portion **10** terminale du guide 6 en amont de l'extrémité 8 d'évacuation et du côté du guide 6 qui est radialement intérieur. La plaque 9 de stabilisation et la portion 10 terminale peuvent avantageusement être plates. Dans la position de stabilisation illustrée en figure 1, la plaque 9 de stabilisation s'étend verticalement. Toutefois, dans la position de réintroduction qui sera décrite avec les figures 5 et 6, la plaque 9 de stabilisation peut être inclinée par rapport à la verticale.

Le guide 6 présente, du côté radialement intérieur du guide 6, une surface 33 de guidage contre laquelle viennent glisser les collerettes 3b des préformes 3. Les préformes 3 sont correctement guidées lorsque leur collerettes 3b sont sensiblement parallèles et en contact avec la surface 33 de guidage. La plaque 9 de stabilisation comprend, du côté radialement extérieur, une surface 30 de guidage en regard de la surface 33 de guidage. Lorsque la plaque 9 de stabilisation est en position de stabilisation, illustrée aux figures 1-4, les surfaces 30 et 33 de guidage sont parallèles et forment un couloir 34 de stabilisation.

Le dispositif 1 d'alignement comprend en outre un déflecteur **11** fixe par rapport au bâti 4 et un élément **12** de raccordement fixé à l'extrémité amont du déflecteur 11 et coulissant dans la plaque 9 de stabilisation. Le déflecteur 11 est incurvé vers la zone 13 centrale de manière qu'une préforme **14** glissant le long du déflecteur 11 soit entraînée par la rotation du disque 2 jusqu'à un point **15** de récupération des préformes 13 situées sur le guide 6 en aval du secteur 7 angulaire.

Le dispositif d'alignement 1 comprend en outre un moyen 16 de captage positif de préformes **18** en cours d'évacuation, c'est-à-dire sortant de l'extrémité 8 d'évacuation. Le moyen 16 se présente par exemple sous la forme d'une roue comprenant une pluralité d'alvéoles 17 reliées à une source de vide de manière à aspirer lesdites préformes 18.

Le dispositif d'alignement 1 comprend également un moyen **19** de récupération d'une partie des préformes 18 en cours d'évacuation pour lesquelles il y aurait eu un incident de captage. Le moyen 19 de récupération se présente sous la forme d'un disque entraînant les préformes 3 issues de l'extrémité 8 d'évacuation mais non captées et les renvoyant vers le disque 2 à travers le secteur 7 angulaire grâce à un espace ménagé entre le déflecteur 11 et l'extrémité du guide 6 en aval du secteur 7 angulaire.

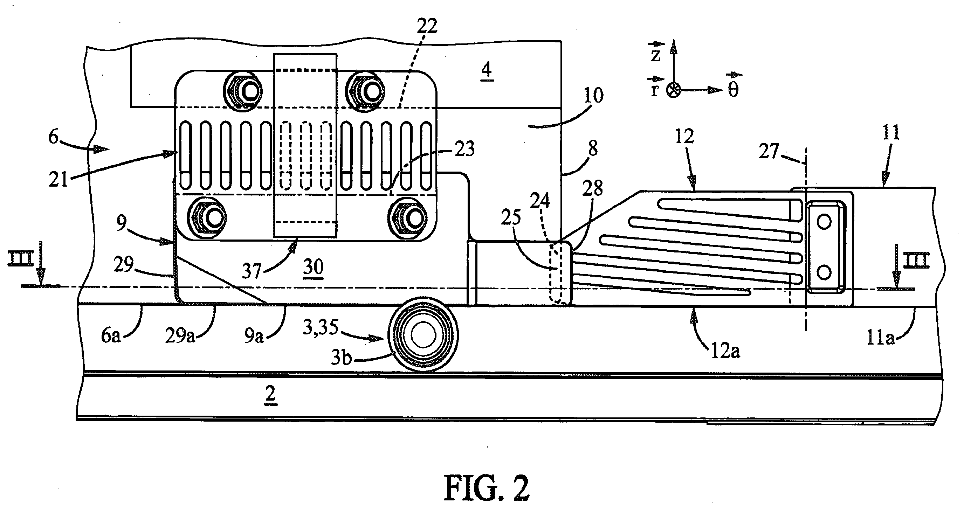

Comme illustré en figure 2, le guide 6 présente un rebord **6a** inférieur situé au dessus du disque 2 à une distance du disque 2 qui est prédéterminée en fonction des dimensions des préformes 3 à aligner de manière à laisser passer entre le disque 2 et le guide 6 le corps 3a de la préforme 3 tout en empêchant la collerette 3b de la préforme de passer entre le guide 6 et le disque 2.

La plaque 9 de stabilisation est mécaniquement raccordée au bâti 4 par un ressort **21** de stabilisation. Le ressort 21 de stabilisation se présente sous la forme d'une plaque flexible ajourée fixée au bâti 4 selon une ligne **22** de fixation parallèle au disque 2. La plaque flexible est également fixée à la plaque 9 de stabilisation selon une ligne **23** de fixation parallèle à la ligne 22 de fixation et parallèle au disque 2. Ainsi, la plaque 9 de stabilisation est rigide et peut se balancer comme un rideau.

Dans une variante, la plaque 9 de stabilisation et le ressort 21 de stabilisation peuvent être fait d'une unique plaque flexible.

Dans une autre variante, le ressort 21 de stabilisation peut être un mécanisme à ressort tel que la plaque 9 de stabilisation est mobile par rapport au bâti selon un ou plusieurs mouvements combinés pris parmi les translations le long des axes respectivement R et Z et les rotations autour des axes respectivement θ et Z. Autrement dit, tout moyen de raccordement bloquant la translation de la plaque 9 de stabilisation le long de l'axe θ et la rotation autour de l'axe R est susceptible de convenir. Dans tous les cas, un rebord 9a inférieur de la plaque 9 de stabilisation reste sensiblement aligné avec le rebord 6a inférieur du guide 6 ou très légèrement au-dessus comme il sera expliqué aux figures 5 et 6.

Le déflecteur 11 présente également un rebord **11a** inférieur à la même distance prédéterminée du disque 2 que le rebord 6a du guide 6.

L'élément 12 de raccordement présente une portion **24** d'extrémité qui coopère avec une forme **25** de réception qui comprend une portion **26a** recouvrant la portion 24 d'extrémité de l'élément 12 de raccordement. La portion 24 d'extrémité de l'élément 12 de raccordement comprend un rebord **24a** inférieur qui est incliné par rapport au disque 2. En revanche, le reste du rebord 12a inférieur de l'élément 12 de raccordement est strictement parallèle au disque 2 à la même distance prédéterminée que les rebords 6a et 11a. L'élément 12 de raccordement est fixé sur une face **11b** intérieure du déflecteur 11 selon une ligne **27** de fixation qui est verticale.

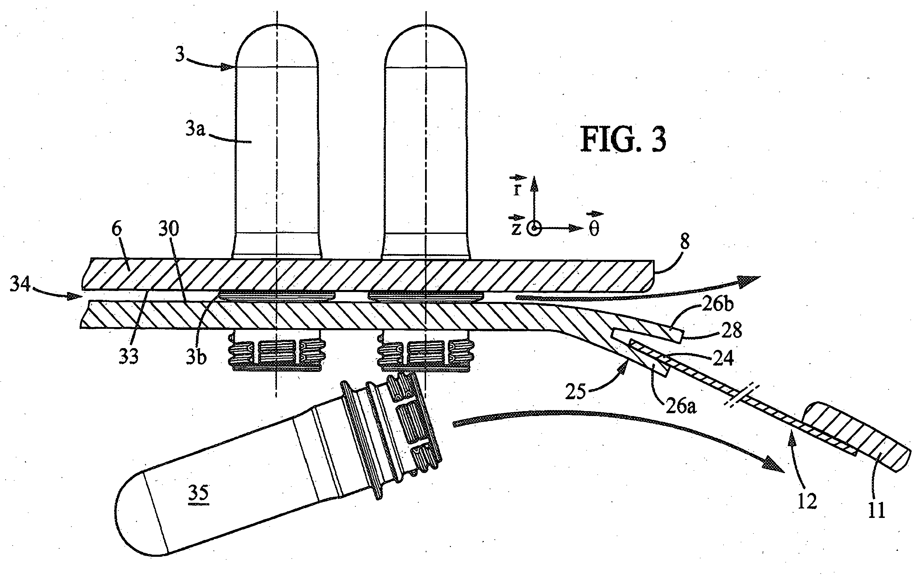

Comme illustré en figure 3, la forme 25 de réception de la plaque 9 de stabilisation est sensiblement située en regard radialement de l'extrémité 8 d'évacuation du guide 6. De plus, la forme 25 de réception présente une section horizontale parallèle au disque 2 en forme de Y. L'une des branches du Y est la portion 26a qui s'étend du côté radialement intérieur. Une autre branche **26b** du Y s'étend du côté radialement extérieur. Ainsi, la portion 24 d'extrémité de l'élément 12 de raccordement coulisse librement dans la plaque 9 de stabilisation. Les deux branches 26a, 26b délimitent un logement sensiblement ajusté à la portion 24 de manière que cette dernière reste parallèle à un côté **28** d'extrémité avale de la plaque 9 de stabilisation.

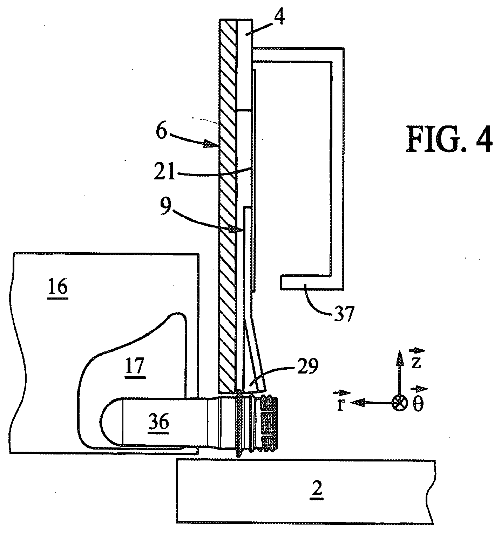

On va à l'aide des figures 1 et 4 décrire l'aiguillage des préformes. La plaque 9 de stabilisation présente une extrémité **29** amont dont le rebord **29a** inférieur est légèrement dévié vers l'intérieur du disque 2 par rapport au reste du rebord 9a qui est parallèle au guide 6. L'endroit du guide 6 situé en regard de cette extrémité 29 amont est un point **31** d'aiguillage du dispositif 1.

Lorsque des préformes **32** présentent une collerette 3b sensiblement plaquée par la force centrifuge contre la face radialement intérieure 33 du guide 6, l'extrémité 29 amont est écartée par la collerette 3b correspondante (figure 4) de sorte que la plaque 9 de stabilisation maintient sensiblement plaquée ladite collerette 3b contre la face 33 du guide 6 et ceci durant tout le parcours dans le couloir 34 de stabilisation jusqu'à l'extrémité 8 d'évacuation du guide 6.

En revanche, une préforme **35** qui parvient au point 31 d'aiguillage avec une collerette 3b à une distance excessive du guide 6 n'est pas aiguillée dans le couloir 34 de stabilisation. Ainsi, l'extrémité 29 amont est un élément d'aiguillage qui effectue un tri en séparant l'écoulement des préformes 32 correctement guidées vers le couloir 34 de stabilisation et l'écoulement des préformes 35 non correctement guidées.

Toutefois, comme le rebord 9a de la plaque de stabilisation laisse passer le corps 3a de la préforme 35, celle-ci peut s'intercaler avec des préformes correctement guidées 32. La collerette 3b de la préforme 35 « non correctement guidée » glisse sur la face radialement intérieure de la plaque 9 de stabilisation. Ainsi, les préformes 32 correctement guidées dans le couloir 34 de stabilisation et les préformes 35 non correctement guidées, continuent à être entraînées sans perturbation par le disque 2 jusqu'à l'extrémité 8 d'évacuation. Comme illustré en figure 3, chacun de ces deux écoulements poursuit son chemin sans être perturbé grâce à la forme de réception 25 en Y.

Comme illustré aux figures 3 et 4, l'effort de plaquage exercé par le ressort 21 de stabilisation des collerettes des préformes 32 correctement guidées contre le guide 6 est suffisant pour qu'une préforme 36 qui est correctement guidée dans le couloir 34 de stabilisation et qui commence à coopérer avec l moyen 16 de captage actif, puisse être ralentie sans que les préformes qui suivent derrière à la vitesse d'entraînement du disque 2 ne provoquent un foisonnement des préformes vers la zone 13 centrale. Autrement dit, l'effort de plaquage est suffisamment élevé pour qu'un simple choc entre les préformes selon l'axe θ ne provoque pas d'écartement de la plaque 9 de stabilisation. Cet effort est cependant suffisamment limité pour ne pas bloquer l'écoulement des préformes dans le couloir 34 de stabilisation.

Comme illustré en figure 5, la synchronisation avec le moyen 16 de captage peut provoquer un incident en particulier dans le cas où la préforme 36, tout en étant « correctement guidée » dans le couloir 34 de stabilisation, n'est pas suffisamment perpendiculaire au guide 6. Il peut arriver alors que l'alvéole 17 qui est prévue pour recevoir la préforme 36 rejette de manière exceptionnelle cette préforme 36 vers l'intérieur du guide 6, selon l'axe R. Grâce au ressort 21 de stabilisation, la plaque 9 de stabilisation peut s'écarter de manière soudaine et laisser passer vers la zone 13 centrale tout ou une partie de la pluralité des préformes 32 correctement guidées dans le couloir 34 de stabilisation.

Dans de telles situations exceptionnelles, la plaque 9 de stabilisation quitte sa position de stabilisation (figure 4) pour aller vers une position de réintroduction (figure 5).

Dans une variante où le moyen de captage ne risque pas de repousser des préformes correctement guidées, la plaque 9 de stabilisation peut être fixe par rapport au bâti 4.

Le dispositif d'alignement 1 comprend une butée arrière 37 limitant le recul de la plaque 9 de stabilisation de manière à éviter des déformations permanentes du ressort 31 de stabilisation.

On va à l'aide de la figure 6 décrire le raccordement entre l'élément 12 de raccordement et la plaque 9 de stabilisation en position de réintroduction. La portion 24 d'extrémité de l'élément 12 de raccordement se vrille pour suivre la plaque 9 de stabilisation jusqu'en position de réintroduction. Le rebord 24a inférieur qui est incliné fait alors saillie en partie seulement hors de la forme 25 de réception. Ainsi, lorsque la préforme 35 glisse sous le rebord 9a, la transition avec le rebord 12a se fait en douceur grâce au rebord 24a qui est incliné. Il n'y a ainsi pas de marche brutale risquant de provoquer des carambolages de préformes entre le rebord 9a soulevé et le rebord 12a qui reste à la distance prédéterminée du disque.

Grâce aux différents moyens décrits, qui peuvent être utilisés simultanément ou bien par groupe ou bien indépendamment les uns des autres, le dispositif évite au maximum les carambolages de préformes pour augmenter la régularité de l'approvisionnement de préformes correctement guidées et captées par un moyen de captage positif.

Que la plaque 9 de stabilisation soit fixe ou mobile, le couloir 34 de stabilisation permet une accumulation d'une pluralité de préformes. Cela permet d'utiliser des moyens 16 de captage positif qui nécessitent de ralentir les préformes par rapport à la vitesse d'entraînement du disque 2. De plus, la plaque 9 de stabilisation évite que les préformes non correctement guidées viennent perturber l'écoulement de préformes dont les collerettes 3b sont dans le couloir 34 de stabilisation.

De plus, certains moyens 16 de captage positif provoquent certains incidents. Certaines préformes déjà sorties du couloir 34 de stabilisation peuvent échapper à l'alvéole 17 de captage. Elles sont alors récupérées par le moyen 19 de récupération. D'autres préformes peuvent mal coopérer avec l'alvéole 17 de captage alors qu'elles sont encore dans le couloir 34 de stabilisation et sont réintroduites vers la zone de vrac. Ces incidents sont gérés automatiquement par le dispositif tout en minimisant les perturbations des écoulements de préformes.

En particulier, la réduction des perturbations de l'écoulement des préformes 35 non aiguillées dans le couloir 34 de stabilisation fait que ces préformes arrivent sur le guide 6 au point 15 de récupération pour un tour ultérieur sans être enchevêtrées et peuvent ainsi plus facilement se glisser correctement sous le guide 6.

## Revendications

1. Dispositif d'alignement d'objets en vrac du type préformes (3) à collerette (3b), comprenant :
- un disque (2) d'entraînement des préformes (3) qui est mobile en rotation autour de son axe,
- un guide (6) périphérique entourant une zone (13) centrale du disque destinée à recevoir en vrac les préformes à aligner, un rebord (6a) inférieur du guide étant disposé au dessus et parallèlement au disque à une distance prédéterminée telle que le guide (6) est apte à correctement guider les préformes glissant sur le disque (2) par effet centrifuge en laissant passer entre le disque (2) et le guide (6) une partie (3a) de préforme et en retenant la collerette (3b) correspondante,
- un bâti (4) auquel est fixé le guide (6) et par rapport auquel le disque (2) est mobile en rotation,
- une plaque (9) de stabilisation rigide présentant une surface (30) de guidage de préformes disposée en regard et d'un coté radialement intérieur d'une surface (33) de guidage correspondante du guide (6), la plaque (9) de stabilisation présentant au moins une position de stabilisation dans laquelle lesdites surfaces (30, 33) de guidage sont sensiblement parallèles, à une distance l'une de l'autre destinée à correspondre sensiblement à l'épaisseur des collerettes (3b) et forment un couloir (34) de stabilisation apte à maintenir le guidage correct d'une pluralité de préformes,
**caractérisé en ce qu'**il comprend
un moyen (19) de récupération d'une partie des préformes issues du couloir (34) de stabilisation et apte à réintroduire lesdites préformes vers la zone (13) centrale.

2. Dispositif selon la revendication 1, dans lequel la plaque (9) de stabilisation est raccordée au bâti par un ressort (21) de stabilisation.

3. Dispositif selon la revendication 2, dans lequel le ressort (21) de stabilisation comprend une plaque flexible fixée sur le bâti (4) selon une ligne (22) de fixation sensiblement parallèle au disque (2).

4. Dispositif selon l'une quelconque des revendications 2 ou 3, dans lequel la plaque (9) de stabilisation est mobile entre ladite position de stabilisation et une position de réintroduction dans laquelle une des préformes (36) dont la collerette est guidée dans le couloir de stabilisation est autorisée à rejoindre la zone (13) centrale.

5. Dispositif selon l'une des revendications précédentes, comprenant un déflecteur (11) rigide qui est fixé au bâti (4), s'étend en aval de l'extrémité (8) et est incurvé de manière à empêcher les préformes (14) dont les collerettes ne sont pas aiguillées dans le couloir (34) d'évacuation de s'échapper par le secteur (7) angulaire sous l'effet de la force centrifuge.

6. Dispositif selon la revendication 5, comprenant en outre un élément (12) de raccordement qui est flexible et présente une première extrémité solidaire de la plaque (9) de stabilisation mobile et une deuxième extrémité solidaire du déflecteur (11) fixe, lequel élément de raccordement est agencé pour guider continûment vers le déflecteur des préformes (35) dont au moins les collerettes sont situées d'un côté radialement intérieur de la plaque de stabilisation.

7. Dispositif selon la revendication 6, dans lequel la deuxième extrémité de l'élément (12) de raccordement est rigidement fixée au déflecteur (11) selon une ligne (27) de fixation sensiblement perpendiculaire au disque (2) et dans lequel la première extrémité coulisse librement par rapport à la plaque (9) de stabilisation.

8. Dispositif selon la revendication 6 ou 7, dans lequel la plaque (9) de stabilisation présente une forme (25) de réception de l'élément (12) de raccordement ayant une section parallèle au disque en forme de Y, l'élément de raccordement coulissant librement entre les deux branches (26a, 26b) du Y.

9. Dispositif selon la revendication 8, dans lequel l'élément (12) de raccordement présente une portion (24) d'extrémité qui est cachée entre les deux branches (26a, 26b) du Y lorsque la plaque (9) de stabilisation est en position de stabilisation, et qui présente un rebord (24a) inférieur, lequel rebord (24a) est incliné par rapport au disque (2) de manière à faciliter l'écoulement des préformes lorsque la plaque (9) de stabilisation est en position de réintroduction.

10. Dispositif selon l'une des revendications 6 à 9, dans lequel l'élément (12) de raccordement, la plaque (9) de stabilisation et le déflecteur (11) présentent chacun un rebord inférieur, lesquels rebords (12a, 9a, 11a) inférieurs sont dans l'alignement l'un de l'autre lorsque la plaque (9) de stabilisation est en position de stabilisation et s'étendent à une distance du disque sensiblement égale à ladite distance prédéterminée.

11. Dispositif selon l'une des revendications 1 à 10, comprenant un moyen (16) de captage positif disposé de manière à saisir des préformes issues du couloir (34) de stabilisation.

12. Dispositif selon l'une des revendications 1 à 11, dans lequel le guide périphérique est interrompu sur un secteur (7) angulaire, lequel secteur s'étend dans le sens de rotation du disque à partir d'une extrémité (8) d'évacuation du guide et dans lequel une extrémité (29) amont de la plaque (9) de stabilisation comprend un élément d'aiguillage apte à trier les préformes (32, 36) correctement guidées des préformes (35) non correctement guidées, le couloir (34) de stabilisation s'étendant sensiblement jusqu'à l'extrémité (8) d'évacuation.

13. Procédé d'alignement d'objets en vrac du type préformes (3) à collerette (3b), comprenant les étapes de :
- projection des préformes en vrac vers un guide (6) périphérique obtenue par entrainent des préformes en vrac par friction naturelle sur un disque (2) rotatif,
- rétention radiale des préformes (3) dans laquelle on retient les préformes par leur collerette (3b) tout en autorisant leur glissement et leur accumulation le long du guide (6) périphérique,
- tri en en point (31) d'aiguillage des préformes correctement guidées par rapport aux préformes non correctement guidées, et
- évacuation des préformes correctement guidées,
- maintien correct du guidage d'une pluralité de préformes entre leur tri et leur évacuation,
dans lequel le maintien correct du guidage peut être suspendu temporairement pour autoriser la réintroduction d'une préforme pourtant correctement guidée mais non encore évacuée pour pallier à un incident.

14. Procédé selon la revendication 13, comprenant en outre une étape de captage positif des préformes évacuées.

15. Procédé selon l'une des revendications 13 à 14, comprenant une étape de déviation dans laquelle on dévie les préformes non correctement guidées vers une portion du guide (6) en amont du point (31) d'aiguillage pour empêcher lesdites préformes de bousculer les préformes en cours d'évacuation.

16. Procédé selon la revendication 15, dans lequel la déviation des préformes non correctement guidées se fait en limitant leur désorientation par rapport au guide (6).

## Patentansprüche

1. Vorrichtung zum Ausrichten loser Gegenstände von der Art Vorformlinge (3) mit Halsring (3b), die enthält:
- eine Scheibe (2) zum Antrieb der Vorformlinge (3), die um ihre Achse drehbeweglich ist,
- eine Umfangsführung (6), die eine zentrale Zone (13) der Scheibe umgibt, dazu bestimmt, die auszurichtenden Vorformlinge lose zu empfangen, wobei eine untere Randleiste (6a) der Führung über der und parallel zur Scheibe in einem derartigen vorbestimmten Abstand angeordnet ist, dass die Führung (6) die auf der Scheibe (2) gleitenden Vorformlinge durch Zentrifugalwirkung korrekt führen kann, indem sie zwischen der Scheibe (2) und der Führung (6) einen Vorformlingteil (3a) durchlässt und indem sie den entsprechenden Halsring (3b) hält,
- ein Gestell (4), an dem die Führung (6) befestigt und in Bezug auf welches die Scheibe (2) drehbeweglich ist,
- eine steife Stabilisierungsplatte (9), die eine Führungsfläche (30) für Vorformlinge aufweist, die gegenüber und auf einer radial inneren Seite einer entsprechenden Führungsfläche (33) der Führung (6) angeordnet ist, wobei die Stabilisierungsplatte (9) mindestens eine Stabilisierungsstellung aufweist, in der die Führungsflächen (30, 33) im Wesentlichen parallel in einem Abstand zueinander sind, der dazu bestimmt ist, im Wesentlichen der Dicke der Halsringe (3b) zu entsprechen, und einen Stabilisierungsdurchgang (34) formen, der die korrekte Führung einer Vielzahl von Vorformlingen aufrechterhalten kann,
**dadurch gekennzeichnet, dass** sie enthält eine Einrichtung (19) zur Wiedergewinnung eines Teils der vom Stabilisierungsdurchgang (34) kommenden Vorformlinge und in der Lage, die Vorformlinge wieder zur zentralen Zone (13) einzuführen.

2. Vorrichtung nach Anspruch 1, wobei die Stabilisierungsplatte (9) durch eine Stabilisierungsfeder (21) an das Gestell angeschlossen ist.

3. Vorrichtung nach Anspruch 2, wobei die Stabilisierungsfeder (21) eine flexible Platte enthält, die am Gestell (4) gemäß einer Befestigungslinie (22) im Wesentlichen parallel zur Scheibe (2) befestigt ist.

4. Vorrichtung nach einem der Ansprüche 2 oder 3, wobei die Stabilisierungsplatte (9) zwischen der Stabilisierungsstellung und einer Wiedereinführstellung beweglich ist, in der es einem der Vorformlinge (36), dessen Halsring im Stabilisierungsdurchgang geführt wird, erlaubt wird, wieder in die zentrale Zone (13) zu kommen.

5. Vorrichtung nach einem der vorhergehenden Ansprüche, die ein steifes Ablenkblech (11) enthält, das am Gestell (4) befestigt ist, sich hinter dem Ende (8) erstreckt und so gekrümmt ist, dass es die Vorformlinge (14), deren Halsringe nicht in den Abfuhrdurchgang (34) geleitet werden, daran hindert, unter der Wirkung der Zentrifugalkraft durch den Winkelsektor (7) auszutreten.

6. Vorrichtung nach Anspruch 5, die außerdem ein Anschlusselement (12) enthält, das flexibel ist und ein erstes Ende fest mit der beweglichen Stabilisierungsplatte (9) verbunden und ein zweites Ende fest mit dem ortsfesten Ablenkblech (11) verbunden hat, welches Anschlusselement ausgebildet ist, um Vorformlinge (35) durchgehend zum Ablenkblech zu führen, von denen mindestens die Halsringe sich auf einer radial inneren Seite der Stabilisierungsplatte befinden.

7. Vorrichtung nach Anspruch 6, wobei das zweite Ende des Anschlusselements (12) gemäß einer Befestigungslinie (27) im Wesentlichen lotrecht zur Scheibe (2) steif am Ablenkblech (11) befestigt ist, und wobei das erste Ende bezüglich der Stabilisierungsplatte (9) frei gleitet.

8. Vorrichtung nach Anspruch 6 oder 7, wobei die Stabilisierungsplatte (9) eine Aufnahmeform (25) des Anschlusselements (12) aufweist, die einen Querschnitt parallel zur Scheibe in Form eines Y hat, wobei das Anschlusselement frei zwischen den zwei Schenkeln (26a, 26b) des Y gleitet.

9. Vorrichtung nach Anspruch 8, wobei das Anschlusselement (12) einen Endabschnitt (24) aufweist, der zwischen den zwei Schenkeln (26a, 26b) des Y versteckt ist, wenn die Stabilisierungsplatte (9) in der Stabilisierungsstellung ist, und der eine untere Randleiste (24a) aufweist, wobei die Randleiste (24a) bezüglich der Scheibe (2) so geneigt ist, dass sie das Abfließen der Vorformlinge erleichtert, wenn die Stabilisierungsplatte (9) in der Wiedereinführstellung ist.

10. Vorrichtung nach einem der Ansprüche 6 bis 9, wobei das Anschlusselement (12), die Stabilisierungsplatte (9) und das Ablenkblech (11) je eine untere Randleiste aufweisen, wobei die unteren Randleisten (12a, 9a, 11a) zueinander ausgerichtet sind, wenn die Stabilisierungsplatte (9) in der Stabilisierungsstellung ist, und sich in einem Abstand zur Scheibe im Wesentlichen gleich dem vorbestimmten Abstand erstrecken.

11. Vorrichtung nach einem der Ansprüche 1 bis 10, die eine positive Erfassungseinrichtung (16) enthält, die so angeordnet ist, dass sie vom Stabilisierungsdurchgang (34) kommende Vorformlinge ergreift.

12. Vorrichtung nach einem der Ansprüche 1 bis 11, wobei die Umfangsführung über einen Winkelsektor (7) unterbrochen ist, welcher Sektor sich in Drehrichtung der Scheibe ausgehend von einem Abfuhrende (8) der Führung erstreckt, und wobei ein vorderes Ende (29) der Stabilisierungsplatte (9) ein Leitelement enthält, das die korrekt geführten Vorformlinge (32, 36) von den nicht korrekt geführten Vorformlinge (35) aussortieren kann, wobei der Stabilisierungsdurchgang (34) sich im Wesentlichen bis zum Abfuhrende (8) erstreckt.

13. Verfahren zur Ausrichtung von losen Gegenständen von der Art Vorformlinge (3) mit Halsring (3b), das die folgenden Schritte enthält:
- Schleudern von losen Vorformlingen zu einer Umfangsführung (6), erhalten durch Antrieb der losen Vorformlinge durch natürliche Reibung auf einer drehenden Scheibe (2),
- radiales Zurückhalten der Vorformlinge (3), bei dem die Vorformlinge an ihrem Halsring (3b) gehalten und gleichzeitig ihr Gleiten und ihre Ansammlung entlang der Umfangsführung (6) erlaubt sind,
- Sortieren an einem Leitpunkt (31) der korrekt geführten Vorformlinge bezüglich der nicht korrekt geführten Vorformlinge, und
- Abfuhr der korrekt geführten Vorformlinge,
- korrekte Aufrechterhaltung der Führung einer Vielzahl von Vorformlingen zwischen ihrem Sortieren und ihrer Abfuhr,
wobei die korrekte Aufrechterhaltung der Führung vorübergehend aufgehoben werden kann, um die Wiedereinführung eines Vorformlings zu erlauben, der zwar korrekt geführt, aber noch nicht abgeführt wurde, um einen Zwischenfall zu beheben.

14. Verfahren nach Anspruch 13, das außerdem einen Schritt der positiven Erfassung der abgeführten Vorformlinge enthält.

15. Verfahren nach einem der Ansprüche 13 bis 14, das einen Schritt der Umleitung enthält, in dem die nicht korrekt geführten Vorformlinge in einen Abschnitt der Führung (6) vor dem Leitpunkt (31) umgeleitet werden, um die Vorformlinge daran zu hindern, die gerade abgeführt werdenden Vorformlinge durcheinanderzuwerfen.

16. Verfahren nach Anspruch 15, wobei die Umleitung der nicht korrekt geführten Vorformlinge erfolgt, indem ihre Fehlausrichtung bezüglich der Führung (6) begrenzt wird.

## Claims

1. Device for aligning objects in bulk such as preforms (3) having a flange (3b), comprising:
- a disc (2) for driving the preforms (3) that is rotatable about its axis,
- a peripheral guide (6) surrounding a central region (13) of the disc, which region is intended to receive in bulk the preforms to be aligned, a lower edge (6a) of the guide being arranged above and parallel to the disc at a predetermined distance such that the guide (6) is able to correctly guide the preforms sliding on the disc (2) through a centrifugal effect, allowing a part (3a) of the preform to pass between the disc (2) and the guide (6) and retaining the corresponding flange (3b),
- a frame (4) to which the guide (6) is fastened and with respect to which the disc (2) is rotatable,
- a rigid stabilization plate (9) having a preform-guiding surface (30) arranged opposite to and on a radially inner side of a corresponding guiding surface (33) of the guide (6), the stabilization plate (9) having at least one stabilization position in which the said guiding surfaces (30, 33) are substantially parallel, at a distance from one another intended to correspond substantially to the thickness of the flanges (3b) and form a stabilization corridor (34) able to maintain the correct guidance of a plurality of preforms,
**characterized in that** it comprises a means (19) for recovering some of the preforms emanating from the stabilization corridor (34) and able to reintroduce the said preforms towards the central region (13).

2. Device according to Claim 1, in which the stabilization plate (9) is connected to the frame by a stabilization spring (21).

3. Device according to Claim 2, in which the stabilization spring (21) comprises a flexible plate fastened to the frame (4) along a fastening line (22) substantially parallel to the disc (2).

4. Device according to either one of Claims 2 and 3, in which the stabilization plate (9) is movable between the said stabilization position and a reintroduction position in which one of the preforms (36) of which the flange is guided in the stabilization corridor is allowed to rejoin the central region (13).

5. Device according to one of the preceding claims, comprising a rigid deflector (11) which is fastened to the frame (4), extends downstream of the end (8) and is curved in such a way as to prevent the preforms (14) of which the flanges are not switched into the discharge corridor (34) from escaping through the angular sector (7) under the effect of the centrifugal force.

6. Device according to Claim 5, additionally comprising a connection element (12) which is flexible and has a first end secured to the movable stabilization plate (9) and a second end secured to the fixed deflector (11), which connection element is arranged to continuously guide towards the deflector preforms (35) of which at least the flanges are situated on a radially inner side of the stabilization plate.

7. Device according to Claim 6, in which the second end of the connection element (12) is rigidly fastened to the deflector (11) along a fastening line (27) substantially perpendicular to the disc (2) and in which the first end slides freely with respect to the stabilization plate (9).

8. Device according to Claim 6 or 7, in which the stabilization plate (9) has a shape (25) for receiving the connection element (12) with a cross section parallel to the disc in the form of a Y, the connection element sliding freely between the two branches (26a, 26b) of the Y.

9. Device according to Claim 8, in which the connection element (12) has an end portion (24) which is hidden between the two branches (26a, 26b) of the Y when the stabilization plate (9) is in the stabilization position, and which has a lower edge (24a), which edge (24a) is inclined with respect to the disc (2) so as to facilitate the flow of the preforms when the stabilization plate (9) is in the reintroduction position.

10. Device according to one of Claims 6 to 9, in which the connection element (12), the stabilization plate (9) and the deflector (11) each have a lower edge, which lower edges (12a, 9a, 11a) are in alignment with one another when the stabilization plate (9) is in the stabilization position and extend at a distance from the disc that is substantially equal to the said predetermined distance.

11. Device according to one of Claims 1 to 10, comprising a positive capturing means (16) arranged so as to seize preforms emanating from the stabilization corridor (34).

12. Device according to one of Claims 1 to 11, in which the peripheral guide is interrupted over an angular sector (7), which sector extends in the direction of rotation of the disc from a discharge end (8) of the guide and in which an upstream end (29) of the stabilization plate (9) comprises a switching element able to sort the correctly guided preforms (32, 36) from the incorrectly guided preforms (35), the stabilization corridor (34) extending substantially as far as the discharge end (8).

13. Method for aligning objects in bulk such as preforms (3) having a flange (3b), comprising the following steps:
- projection of the preforms in bulk towards a peripheral guide (6) obtained by driving preforms in bulk by natural friction on a rotary disc (2),
- radial retention of the preforms (3) in which the preforms are retained by their flange (3b) while allowing them to slide and accumulate along the peripheral guide (6),
- sorting at a switchpoint (31) the correctly guided preforms with respect to the incorrectly guided preforms, and
- discharge of the correctly guided preforms,
- correct maintaining of the guidance of a plurality of preforms between their sorting and their discharge, in which the correct maintaining of the guidance can be temporarily suspended to allow the reintroduction of a preform which, although correctly guided, is not yet discharged in order to overcome an incident.

14. Method according to Claim 13, additionally comprising a step of positively capturing the discharged preforms.

15. Method according to either of Claims 13 and 14, comprising a diverting step in which the incorrectly guided preforms are diverted towards a portion of the guide (6) upstream of the switchpoint (31) to prevent the said preforms from jostling against the preforms being discharged.

16. Method according to Claim 15, in which the incorrectly guided preforms are diverted by limiting their disorientation with respect to the guide (6).
